Europäisches Patentamt

European Patent Office

Office européen des brevets

(19)

(11) Veröffentlichungsnummer: **0 074 003**
**A2**

(12) # EUROPÄISCHE PATENTANMELDUNG

(21) Anmeldenummer: **82107686.6**

(22) Anmeldetag: **23.08.82**

(51) Int. Cl.³: **B 60 C 7/10**

(30) Priorität: **03.09.81 DE 3134963**

(43) Veröffentlichungstag der Anmeldung:
**16.03.83 Patentblatt 83/11**

(84) Benannte Vertragsstaaten:
**AT BE DE FR GB IT LU NL SE**

(71) Anmelder: **BAYER AG**
**Zentralbereich Patente, Marken und Lizenzen**
**D-5090 Leverkusen 1, Bayerwerk(DE)**

(72) Erfinder: **Ippen, Jakob, Dr.**
**Schleiermacherstrasse 17**
**D-5090 Leverkusen(DE)**

(72) Erfinder: **Stüttgen, Friedel**
**Albrecht-Dürer-Strasse 94**
**D-5024 Pulheim(DE)**

(54) **Reifen mit Notlaufeigenschaften.**

(57) Der Notlaufreifen mit verminderter Belastbarkeit besteht aus einem strangextrudierten Hohlkammerprofil, daß mit einem Textilgewebe umgeben ist.

FIG. 1

EP 0 074 003 A2

BAYER AKTIENGESELLSCHAFT        5090 Leverkusen, Bayerwerk

Zentralbereich

Patente, Marken und Lizenzen   Kr/bo/c


Reifen mit Notlaufeigenschaften
_____


Die Erfindung betrifft einen Reifen mit Notlaufeigenschaften bestehend aus einem ringförmigen Federelement,
Gürtel und Laufflächenstreifen mit Profilrillen.

Bei Kraftfahrzeugen ist ein Reserverad mitzuführen,
das möglicherweise, wenn es im Notfall einmal gebraucht
wird, durch Alterung und Entweichen der längere Zeit
vorher eingepumpten Luft nicht mehr einsatzfähig ist.
Weiter gibt es spezielle Reserveräder, die aus Preisgründen schwächer ausgelegt sind. Bei hohe Beanspruchung besteht dann die Gefahr eines Defektes, der unter keinen Umständen die Sicherheit des Fahrzeuges
gefährden darf. Deshalb wird besonderen Wert auf die
Notlaufeigenschaften gelegt.

Aufgabe der Erfindung ist es einen Reifen zu finden,
der als Ersatz bei reduzierten Anforderungen ausreichende Fahreigenschaften besitzt, über einen längeren
Zeitraum ohne Wartung einsatzfähig bleibt, preiswert
herzustellen ist und über sichere Notlaufeigenschaften
verfügt.


Le A 21 268

Die Aufgabe wird erfindungsgemäß dadurch gelöst, daß das Federelement aus einem Strang extrudierter Hohlkammerprofil mit einheitlicher Gummimischung zusammengesetzt ist.

Der Vorteil der Erfindung besteht darin, daß dieser auf die Felge aufvulkanisierte Reifen pannensicher ist, so daß er auch ohne Druckluft gefahren werden kann und trotzdem einen durch sein Federverhalten ausreichenden Fahrkomfort bietet. Durch die Verminderung der Masse infolge des Hohlraumes wird ein Hitzestau vermieden und durch geringere umlaufende Masse die Fahrdynamik verbessert. Weiter ist das Hohlkammerprofil durch Extrusion wirtschaftlich herzustellen.

In einer besonderen Ausführungsform ist das Hohlkammerprofil mindestens entlang beider freier Seitenwände mit einem in einer Gummimischung eingebetteten Textilgewebe versehen.

Durch die Umgebung des Hohlkammerprofils mit einem Testilgewebe wird der Reifen stabilisiert, so daß er höhere Belastungen aushält, die noch durch einen zusätzlichen Luftdruck von 4 - 6 bar in der Hohlkammer verbessert werden kann, so daß der Reifen dann auch im Industriebetrieb einzusetzen ist.

In einer anderen Ausführungsform ist in der Wandung des Hohlkammerprofils mindestens eine Öffnung vorhanden.

Le A 21 268

Durch Öffnungen zur Hohlkammer ist das Federverhalten zu verändern.

In einer Ausführungsform ist die einzige Öffnung in der Hohlkammer mit einem gegen Druckluft selbstschließenden Ventil versehen.

Durch das Ventil ist es möglich einen Luftdruck in der Hohlkammer zu halten, der je nach den Erfordernissen 0,3 - 6 bar betragen kann.

In einer zusätzlichen Ausführungform ist unterhalb des Kohlkammerprofils ein Reifenfuß mit zwei umlaufenden Kerndrähten angeordnet.

Dieser Zusatz zur Konstruktion erlaubt, den Reifen auf jede geteilte Felge zu montieren.

Die Reifen der Erfindung können aus jedem beliebigen Natur- oder Synthesekautschuk hergestellt werden. Besonders geeignet sind Naturkautschuk, Styrolbutadienkautschuk, Polybutadien- oder Ethylenpropylenterpolymerisatkautschuk. Als besonders geeignet haben sich folgende Mischungen herausgestellt.

Harter Reifenfuß

| | |
|---|---|
| Naturkautschuk | 25,0 Gew.-Teile |
| Butadienkautschuk | 75,0 Gew.-Teile |
| Ruß Corax 3 | 80,0 Gew.-Teile |

Le A 21 268

| | |
|---|---|
| Kondensationsprodukt von Acetylen mit tert.-Butylphenol | 4,0 Gew.-Teile |
| Fichtenholz-Destillat | 4,0 Gew.-Teile |
| Stearinsäure | 2,0 Gew.-Teile |
| N-Isopropyl-N'-phenyl-p-phenylendiamin | 2,5 Gew.-Teile |
| 2,2,4-Trimethyl-1,2-dihydrochinolin | 1,5 Gew.-Teile |
| Zinkoxid | 5,0 Gew.-Teile |
| N-Cyclohexyl-benzthiazyl-(2)-sulphenamide | 1,2 Gew.-Teile |
| Unlöslicher Schwefel | 3,76 Gew.-Teile |

Mischungsplastizität / 80°C

| | |
|---|---|
| Defo-Härte/Defo-Elastizität | 4250/21 |
| Zugfestigkeit (MPa) | 16,6 |
| Bruchdehnung (%) | 300 |
| Spannungswert b. 300 % Dehnung (MPa) | 16,2 |
| Weiterreißfestigkeit nach Pohle (N) | 265 |
| Härte bei 20°C (Shore A) | 79 |
| Stoßelastizität (DIN 53 512) (%) | 38 |

Elastischer Korpus

| | |
|---|---|
| Naturkautschuk | 80,0 Gew.-Teile |
| Butadienkautschuk | 20,0 Gew.-Teile |
| Ruß N-539 | 40,0 Gew.-Teile |
| Kieselsäure | 8,0 Gew.-Teile |
| Zinkoxid | 10,0 Gew.-Teile |
| Mineralöl, aromatisch | 3,0 Gew.-Teile |
| Kondensationsprodukt von Acetylen mit tert.-Butylphenol | 2,0 Gew.-Teile |

Le A 21 268

| | |
|---|---|
| N-Isopropyl-N'-phenyl-p-phenylendiamin | 1,8 Gew.-Teile |
| 2,2,4-Trimethyl-1,2-dihydrochinolin | 1,5 Gew.-Teile |
| Stearinsäure | 0,75 Gew.-Teile |
| Resorcin/Stearin-Schmelze | 1,2 Gew.-Teile |
| Hexamethylentetramin | 0,75 Gew.-Teile |
| N-Cyclohexyl-benzthiazyl-(2)-sulphen-amide | 0,7 Gew.-Teile |
| Dibenzthiazyldisulfid | 0,3 Gew.-Teile |
| Unlöslicher Schwefel | 6,25 Gew.-Teile |

Mischungsplastizität/80°C

| | |
|---|---|
| Defo-Härte/Defo-Elastizität | 475/14 |
| Zugfestigkeit (MPa) | 20,3 |
| Bruchdehnung (%) | 460 |
| Spannungswert b. 300 % Dehnung (MPa) | 11,7 |
| Weiterreißfestigkeit nach Pohle (N) | 250 |
| Härte bei 20°C (Shore A) | 60 |
| Stoßelastizität (DIN 53 512) (%) | 64 |

Hochabriebfeste Lauffläche

| | |
|---|---|
| Naturkautschuk | 80,0 Gew.-Teile |
| cis-1,4-Polybutadien | 20,0 Gew.-Teile |
| Ruß N-330 | 55,0 Gew.-Teile |
| Aromatisches Mineralöl | 3,0 Gew.-Teile |
| Stearinsäure | 2,5 Gew.-Teile |
| Ozonschutzwachs | 1,0 Gew.-Teile |
| N-Isopropyl-N'-phenyl-p-phenylendiamin | 2,5 Gew.-Teile |
| 2,2,4-Trimethyl-1,2-dihydrichinolin, polym. | 1,5 Gew.-Teile |

Le A 21 268

| Zinkoxid | 1,5 Gew.-Teile |
| Benzothiazyl-2-sulfenmorpholid | 1,2 Gew.-Teile |
| Unlöslicher Schwefel | 1,9 Gew.-Teile |

Mischungsplastizität / 80°C

| Defo-Härte/Defo-Elastizität | 1100/15 |
| Zugfestigkeit (MPa) | 21,9 |
| Bruchdehnung (%) | 460 |
| Spannungswert b. 300 % Dehnung (MPa) | 13 |
| Weiterreißfestigkeit nach Pohle (N) | 370 |
| Härte bei 20°C (Shore A) | 66 |
| Stoßelastizität (DIN 53 512) (%) | 46 |
| DIN-Abrieb (Schmirgel 60) (mm³) | 59 |

Beispiele der Erfindung sind in den Zeichnungen dargestellt und werden im folgenden näher beschrieben. Es zeigen

    Fig. 1    Querschnitt eines Reifens
    Fig. 2    Querschnitt eines aufpumpbaren Reifens

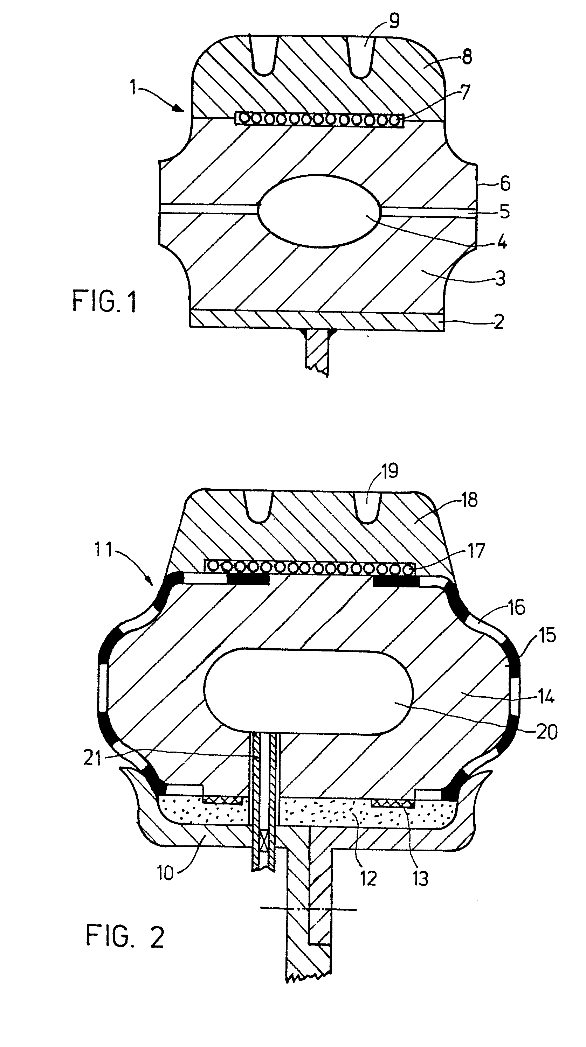

In Fig. 1 ist ein Reifen 1 auf einer Stahlfelge 2 vulkanisiert, der aus einem umlaufenden Hohlkammerprofil 3 mit Hohlkammer 4 und Öffnungen 5 in einer Seitenwand 6 sowie einem Gürtel 7 mit darüberliegenden Laufflächenstreifen 8 einschließlich Profilrillen 9 besteht. Das Verhältnis Höhe/Breite sollte 0,3 - 1,5, vorzugsweise 0,4

Le A 21 268

bis 1,2 betragen. Das Trägheitsmoment der Seitenwand 6 muß mindestens siebenmal größer als das entsprechende Trägheitsmoment bei Normalreifen sein.

In Fig. 2 ist auf einer geteilten Felge 10 ein Reifen 11 dargestellt, der aus Reifenfuß 12, Kerndraht 13, Hohlkammerprofil 14 mit die Seitenwände 15 umfassendes Textilgewebe 16, einem Gürtel 17 und einen Laufstreifen 18 mit Profilrillen 19 besteht. Die Hohlkammer 20, die flach, rund und oval ausgebildet sein kann, ist durch ein Ventil 21 mit der Außenwelt verbunden.

Le A 21 268

Patentansprüche

1. Reifen mit Notlaufeigenschaften, bestehend aus ringförmigem Federelement, Gürtel (7,17) und Lauffächenstreifen (8,18) mit Profilrillen (9,19), dadurch gekennzeichnet, daß das Federelement aus einem strangextrudierten Hohlkammerprofil (3,14) mit einheitlicher Gummimischung zusammengesetzt ist.

2. Reifen nach Anspruch 1, dadurch gekennzeichnet, daß das Hohlkammerprofil (3,14) mindestens entlang beider freier Seitenwände (6,15) mit einem in einer Gummimischung eingebetteten Textilgewebe (16) versehen ist.

3. Reifen nach Anspruch 1 - 2, dadurch gekennzeichnet, daß in der Wandung des Hohlkammerprofils (3,14) mindestens eine Öffnung (5) vorhanden ist.

4. Reifen nach Anspruch 3, dadurch gekennzeichnet, daß die einzige Öffnung (5) der Hohlkammer (4,20) mit einem gegen Druckluft selbstschließenden Ventil (21) versehen ist.

5. Reifen nach Anspruch 1 - 4, dadurch gekennzeichnet, daß unterhalb des Hohlkammerprofils (3,14) ein Reifenfuß mit zwei umlaufenden Kerndrähten (13) angeordnet ist.

Le A 21 268

FIG.1

FIG. 2